# EUROPÄISCHE PATENTSCHRIFT

(11) **EP 1 481 529 B1**
(45) Veröffentlichungstag und Bekanntmachung des Hinweises auf die Patenterteilung: **30.11.2016**
(21) Anmeldenummer: 04719999.7
(22) Anmeldetag: 12.03.2004
(51) Int. Cl.: H04L 29/06

(54) **VERFAHREN ZUM ÜBERTRAGEN VON MITTEILUNGSNACHRICHTEN BEI DER ZUSTELLUNG VON MULTIMEDIANACHRICHTEN AN ALS MULTIMEDIANACHRICHTENSENKEN AUSGEBILDETE TELEKOMMUNIKATIONSGERÄTE**
METHOD FOR TRANSMITTING COMMUNICATION MESSAGES WITH A VIEW TO DELIVERING MULTIMEDIA MESSAGES TO TELECOMMUNICATION DEVICES CONFIGURED AS MULTIMEDIA MESSAGE SINKS
PROCEDE DE TRANSMISSION DE MESSAGES DE COMMUNICATION LORS DE LA REMISE DE MESSAGES MULTIMEDIA A DES APPAREILS DE TELECOMMUNICATION CONFIGURES COMME COLLECTEURS DE MESSAGES MULTIMEDIA

(30) Priorität: 13.03.2003 DE 10311044
(43) Veröffentlichungstag der Anmeldung: 01.12.2004
(73) Patentinhaber: Siemens Aktiengesellschaft, 80333 München (DE)
(72) Erfinder: BECKER, Thomas, 59755 Arnsberg (DE); GEIGER, Jan-Christoph, 44795 Bochum (DE); GOERTZ, Werner, 46282 Dorsten (DE); HELING, Guido, 44263 Dortmund (DE); MROS, Peter, 44579 Castrop-Rauxel (DE); NIEDER, Stefan, 46419 Isselburg (DE); RATERMANN, Albert, 58452 Witten (DE); WILLEMSEN, Stanislaus, NL-7091 XB Dinxperlo (NL); VAN DE LOGT, Marco, 47574 Goch (DE)
(86) Internationale Anmeldenummer: PCT/EP2004/002620
(87) Internationale Veröffentlichungsnummer: WO 2004/082253

(56) Entgegenhaltungen:
- WO-A-01/33782
- WO-A-01/35622

## Beschreibung

Die vorliegende Erfindung betrifft ein Verfahren Übertragen von Mitteilungsnachrichten bei der Zustellung von Multimedianachrichten an als Multimedianachrichtensenken ausgebildete Telekommunikationsgeräte gemäß dem Oberbegriff des Patentanspruches 1.

Das Übertragen (Senden und Empfangen) von Servicenachrichten (Multimedianachrichten, Kurznachrichten) an ein Telekommunikationsgerät - beispielsweise ein Mobiltelefon (Handy), ein Schnurlostelefon bestehend aus einer Basisstation sowie mindestens einem Mobilteil, ein Festnetztelefon, ein Fax-Gerät, einen Personal Computer, einen Server etc. - und umgekehrt von dem Telekommunikationsgerät ist ein Kommunikationsdienst, der bezüglich der mit den Nachrichten übertragenen Informationsinhalten, wie z.B. Texte, multimediale Inhalte wie z.B. Audio-/Videodaten (Tonrufe, Bildschirmschoner), Grafiken, Programme etc., zu unterscheiden ist und der zunächst im Mobilfunkbereich Einzug gehalten hat und aufgrund der großen Akzeptanz sich mittlerweile auch nach und nach im Festnetzbereich etabliert. Von der Vielzahl der im Mobilfunknetz angebotenen Dienste - wie z.B. dem "Short **M**essage (**M**essaging) **S**ervice (SMS)", dem "**E**nhanced **M**essage (**M**essaging) **S**ervice (EMS)", dem "**M**ultimedia **M**essage (**M**essaging) **S**ervice (MMS)", dem "Instant Messaging", der "**O**ver **T**he Air **A**ctivation (OTA)", dem "E-Mail" etc. - scheint im Festnetz wie im Mobilfunkbereich die Entwicklung derzeit dahin zu gehen, dass insbesondere der SMS- und MMS-Kommunikationsdienst eine größere Rolle spielen werden. Während der SMS-Dienst sowohl für den Mobilfunkbereich als auch für den Festnetzbereich bereits standardisiert ist (**für GSM:** ETSI TS 100 942 V7.0.0, Release 1998; **für ISDN/PSTN:** ETSI ES 201 912 V1.1.1, Release 01/2002) gilt für den MMS-Dienst Gleiches nur für den Mobilfunkbereich (vgl.: 3GPP TS 22.140 V4.y.z; stage 1 and 2; Release 4), wohingegen im Festnetzbereich derzeit Standardisierungsaktivitäten laufen (vgl.: ETSI DES/AT-030023 V0.1.0, 11/2003).

Der SMS-Dienst im Fest- und Mobilnetz ist ein Punkt-zu-Punkt-Dienst und zeichnet sich durch eine reine Push-Funktionalität aus - d.h. der Inhalt der Kurznachricht [**S**hort **M**essage (SM)], deren Länge maximal 160 Byte beträgt, wird vom Kurznachrichten-Servicezentrum bzw. Kurznachrichten-Dienstzentrum [**S**hort **M**essage **S**ervice **C**enter (SMSC)] an das Telekommunikationsgerät gesendet und besteht in der Regel aus Textdaten -, wobei der Verbindungsaufbau vom Servicezentrum initiiert wird. Während der SMS-Dienst im Mobilfunkbereich zwischen dem Telekommunikationsgerät und dem Kurznachrichten-Servicezentrum verbindungslos abläuft, indem die Kurznachricht ohne Aufbau einer Nutzkanalverbindung über einen Signalisierungskanal übertragen wird, erfolgt der Ablauf des SMS-Dienstes im Festnetz verbindungsorientiert, indem eine Nutzkanalverbindung zwischen dem Telekommunikationsgerät und dem Kurznachrichten-Servicezentrum hergestellt wird und die Kurznachricht hierüber mittels der Realisierung des Dienstmerkmals "**C**alling **L**ine **I**dentification (CLI)", was als "**C**alling Line **I**dentification **P**resentation (CLIP)" bezeichnet wird, durch ein FSK- und/oder DTMF-Signalisierung (**F**requency **S**hift **K**eying bzw. **D**ual **T**one **M**ultiple **F**requency) übermittelt wird.

Beim MMS-Dienst, der im Mobilfunknetz wie der SMS-Dienst verbindungslos über einen WAP-Transportweg (Nutzung des **W**ireless **A**pplication **P**rotocol) abgewickelt wird, kommt im Festnetz hingegen ein anderer Mechanismus zum Tragen:
Beim Versand einer Multimedianachricht [**M**ultimedia **M**essage (MM)], deren Größe im Prinzip unbegrenzt, aber derzeit auf ca. 100kByte beschränkt ist und in der z.B. Texte, multimediale Inhalte wie z.B. Audio-/Videodaten (Tonrufe, Bildschirmschoner), Grafiken, Programme etc. kurzum Text-, Audio- und/oder Videodaten enthalten sein können, an das Telekommunikationsgerät wird zunächst wieder verbindungsorientiert eine Mitteilungsnachricht, die sogenannte MMS-Notification, verschickt, die das Telekommunikationsgerät darüber informiert, dass eine Multimedianachricht beim Multimedianachrichten-Servicezentrum bzw. Multimedianachrichten-Dienstzentrum [**M**ultimedia **M**essage **S**ervice **C**enter (MMSC)] vorliegt. Dies geschieht über einen Push-Dienst, wie z.B. den SMS-Dienst. Anschließend muss, im Unterschied zum Empfang einer Kurznachricht, ein weiterer Verbindungsaufbau vom Telekommunikationsgerät zum Multimedianachrichten-Servicezentrum initiiert werden, um den Inhalt der Multimedianachricht zu erhalten.

Beim Zustellen einer Multimedianachricht, die z.B. von einem Absender (ein Sendeendgerät bzw. ein Absender-Endgerät, das als Multimedianachrichtenquelle ausgebildet ist) an einen Adressaten (ein Empfangsendgerät bzw. ein Adressaten-Endgerät, das als Multimedianachrichtensenke ausgebildet ist) übermittelt wird oder sich - ganz allgemein formuliert - in einem Multimedianachrichten-Dienstzentrum befindet, wird im Unterschied zum Kurznachrichten-Dienst, bei dem der Inhalt der Kurznachricht vom Kurznachrichten-Dienstzentrum an den Adressaten bzw. das Adressaten-Endgerät gesendet wird, wobei der Verbindungsaufbau vom Kurznachrichten-Dienstzentrum initiiert wird, zunächst eine Mitteilungsnachricht, die sogenannte MMS-Notifikation, verschickt, die den Adressaten bzw. das Adressaten-Endgerät darüber informiert, dass eine Multimedianachricht beim Multimedianachrichten-Dienstzentrum vorliegt. Die Mitteilungsnachricht wird dabei über einen Push-Dienst übertragen. Während für die Übertragung der Mitteilungsnachricht im Festnetz vorzugsweise der "Short Message Service" als Push-Dienst zum Einsatz kommt, wird die Mitteilungsnachricht im Mobilnetz basierend auf einem "Wireless Application Protocol (WAP)"-Dienst, der insbesondere das Rahmenwerk für den Internet-Zugang von mobilen drahtlos kommunizierenden Teilnehmern darstellt, durch eine spezielle "WAP-Push"-Nachricht übertragen.

Anschließend wird, im Gegensatz zum Kurznachrichten-Dienst, ein Verbindungsaufbau vom Adressaten bzw. Adressaten-Endgerät zum Multimedianachrichten-Dienstzentrum initiiert, um den Inhalt der Multimedianachricht zu erhalten. Dieser vorstehend beschriebene Zustellvorgang einer Multimedianachricht ist ausführlicher in den nachveröffentlichten Internationalen Patentanmeldungen (int. Aktenzeichen "PCT/EP03/14639" und "PCT/EP2004/001697") dargestellt und erläutert.

Das Absender-Endgerät als auch das Adressaten-Endgerät kann jeweils entweder ein mobilnetz-spezifisches Endgerät - wie z.B. ein Mobiltelefon nach dem GSM- oder UMTS-Standard - oder ein festnetz-spezifisches Endgerät - wie z.B. ein Schnurlostelefon mit einer dem Festnetz zugeordneten Schnurlos-Basisstation und mindestens einem mit der Schnurlos-Basisstation verbundenen Schnurlos-Mobilteil nach dem DECT-Standard - sein. Andererseits ist es auch möglich, dass beide Geräte als Festnetztelefon, als Faksimilegerät, als Personal Computer oder sogar als Server ausgebildet sein können.

Die Notifizierung mittels einer Kurznachricht gemäß dem "Short Message Service" wird sowohl für Adressaten-Endgeräte, die für den Multimedianachrichten-Dienst geeignet sind, also MMS-fähig sind, als auch für Adressaten-Endgeräte, die für den Multimedianachrichten-Dienst nicht geeignet sind, also Nicht-MMS-fähig sind, eingesetzt, während die Notifizierung mittels einer "WAP-Push"-Nachricht gemäß dem "Wireless Application Protocol (WAP)"-Dienst nur für Adressaten-Endgeräte, die für den Multimedianachrichten-Dienst geeignet sind, also MMS-fähig sind, eingesetzt wird.

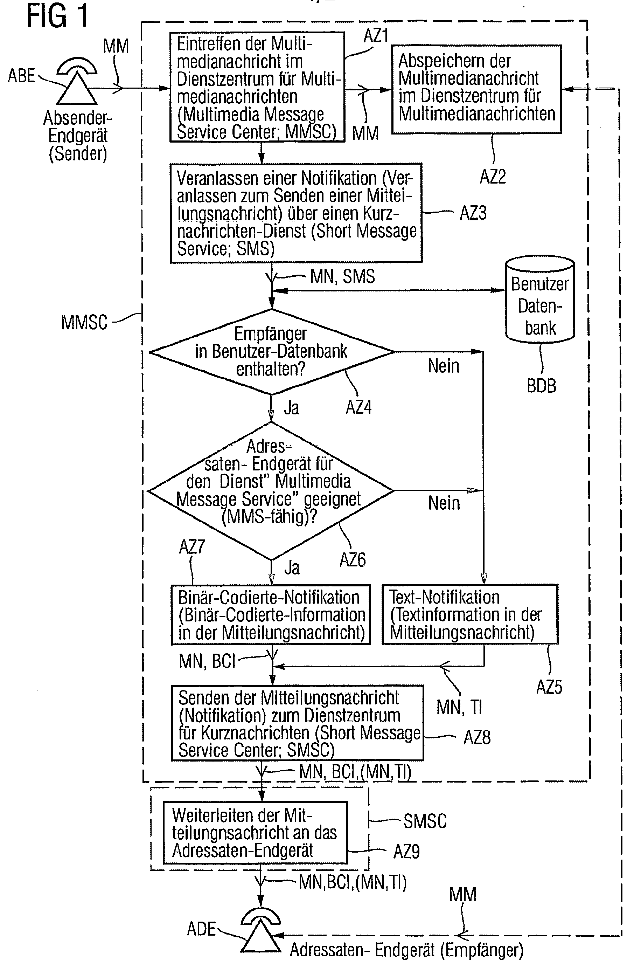

Dieser Stand der Technik bezüglich der Notifizierung mittels der Kurznachricht nach dem "Short Message Service" ist in FIGUR 1 dargestellt. Es zeigt:
FIGUR 1 ein kombiniertes Block-/Ablaufdiagramm zur Darstellung der Übertragung einer Mitteilungsnachricht (Notifikation) bei der Zustellung einer Multimedianachricht, die z.B. von einem Absender-Endgerät (Sender) stammt, an ein Adressaten-Endgerät (Empfänger)

FIGUR 1 zeigt wie ein Absender-Endgerät ABE als Sender eine für ein Adressaten-Endgerät ADE als Empfänger bestimmte Multimedianachricht ("Multimedia Message") MM an ein Multimedianachrichten-Dienstzentrum MMSC, dem "Multimedia Message Service Center", sendet. Diese gesendete Multimedianachricht MM trifft in einem ersten Ablaufzustand AZ1 beim Multimedianachrichten-Dienstzentrum MMSC ein und wird in einem zweiten Ablaufzustand AZ2 in einen Speicher des Multimedianachrichten-Dienstzentrums MMSC abgespeichert. In einem dritten Ablaufzustand AZ3 veranlasst das Multimedianachrichten-Dienstzentrum MMSC, das eine Mitteilungsnachricht MN an das Adressaten-Endgerät ADE gesendet wird. Dieses Versenden der Mitteilungsnachricht MN geschieht im Festnetz vorzugsweise über einen Kurznachrichten-Dienst SMS, den "Short Message Service", während als Mitteilungsnachrichtenträger im Mobilnetz der "Wireless Application Protocol (WAP)"-Dienst benutzt wird.

Damit diese Mitteilungsnachricht MN an das Adressaten-Endgerät ADE geschickt werden kann, überprüft das Multimedianachrichten-Dienstzentrum MMSC in einem vierten Ablaufzustand AZ4, ob der Empfänger der Multimedianachricht MMN, dem das Adressaten-Endgerät ADE gehört und/oder der das Adressaten-Endgerät ADE benutzt, in einer Benutzer-Datenbank BDB enthalten bzw. registriert ist. Ist dieses nicht der Fall, so wird in einem fünften Ablaufzustand AZ5 die Mitteilungsnachricht MN als Text-Notifikation ausgeführt, bei der die Mitteilungsnachricht MN als erste Mitteilungsinformation vorzugsweise eine Textinformation TI enthält.

Wird jedoch in dem vierten Ablaufzustand AZ4 festgestellt, dass der Empfänger in der Benutzer-Datenbank BDB enthalten bzw. registriert ist, so wird in einem sechsten Ablaufzustand AZ6 des Multimedianachrichten-Dienstzentrums MMSC überprüft, ob das Adressaten-Endgerät ADE für den Dienst "Multimedia Message Service (MMS)" geeignet ist, also MMS-fähig ist.

Ist dieses nicht der Fall, so wird wiederum die Mitteilungsnachricht MN in dem fünften Ablaufzustand AZ5 als Text-Notifikation ausgeführt, bei der in der Mitteilungsnachricht MN die Textinformation TI enthalten ist.

Wird in dem sechsten Ablaufzustand AZ6 jedoch festgestellt, dass das Adressaten-Endgerät ADE MMS-fähig ist, so wird in einem siebten Ablaufzustand AZ7 des Multimedianachrichten-Dienstzentrums MMSC die Mitteilungsnachricht MN als Binär-Codierte-Notifikation ausgeführt, bei der die Mitteilungsnachricht MN eine Binär-Codierte-Information BCI enthält.

Aufgrund der beiden Abfragen in dem vierten Ablaufzustand AZ4 und in dem sechsten Ablaufzustand AZ6 wird in einem achten Ablaufzustand AZ8 des Multimedianachrichten-Dienstzentrums MMSC entweder die Binär-Codierte-Notifikation MN, BMI oder die Text-Notifikation MN, TI von dem Multimedianachrichten-Dienstzentrum MMSC entsprechend der SMS-Trägerschaft für die Mitteilungsnachricht zu einem Kurznachrichten-Dienstzentrum SMSC gesendet.

Die von dem Multimedianachrichten-Dienstzentrum MMSC als Binär-Codierte-Notifikation oder Text-Notifikation gesendete Mitteilungsnachricht MN wird von dem Kurznachrichten-Dienstzentrum SMSC in einem neunten Ablaufzustand AZ9 an das Adressaten-Endgerät ADE weitergeleitet.

Aufgrund dieser weitergeleiteten Mitteilungsnachricht MN ist das Adressaten-Endgerät ADE, sofern sich um ein MMS-fähiges Endgerät handelt, das die Binär-Codierte-Notifikation MN, BCI auswerten kann, schließlich in der Lage, die in dem zweiten Ablaufzustand AZ2 abgespeicherte Multimedianachricht MM von dem Multimedianachrichten-Dienstzentrum MMSC abzuholen bzw. herunterzuladen (gestrichelte Verbindung in FIGUR 1 zwischen dem Adressaten-Endgerät ADE und dem zweiten Ablaufzustand AZ2 im Multimedianachrichten-Dienstzentrum MMSC).

Generell besteht bei diesem bekannten Ablauf das Problem, dass das die Mitteilungsnachricht übertragende Multimedianachrichten-Dienstzentrum MMSC bzw. das für die Übertragung genutzte "Gateway", im vorliegenden Fall das Kurznachrichten-Dienstzentrum SMSC, Kenntnis darüber besitzen muss, ob es sich bei dem Adressaten-Endgerät ADE um ein MMS-fähiges oder um ein Nicht-MMS-fähiges Endgerät handelt, um eine entsprechend geeignete MMS-Notifikation, die Binär-Codierte-Notifikation MN, BCI oder die Text-Notifikation MN, TI, versenden zu können.

Bei einem SMS-basierten Träger für die MMS-Notifizierung von MMS-fähigen Endgeräten wird eine Kurznachricht verwendet, die eine Notifikation in binär codierter Form enthält. Die MMS-Funktionalität im MMS-fähigen Endgerät ist in der Lage, diese Binär-Codierte-Notifikation auszuwerten und beispielsweise die in der Notifikation bezeichnete Multimedianachricht vom Multimedianachrichten-Dienstzentrum abzuholen bzw. herunterzuladen.

Bei einem SMS-basierten Träger für die MMS-Notifizierung von Nicht-MMS-fähigen Endgeräte wird eine Kurznachricht verwendet, die eine Notifikation als normalen Text enthält. Diese Textinformation verweist z.B. auf eine Internet-Adresse, unter der die entsprechende Multimedianachricht abrufbar ist.

Aus der WO 01/33782 A1 ist ein Multimedia Messaging Service bekannt, bei dem insbesondere eine notification message einen content type verwendet, der es ermöglicht, Daten sowohl in Textformat als auch in binärem Format zu übertragen.

Die der Erfindung zugrundeliegende Aufgabe besteht darin, ein Verfahren zum Übertragen von Mitteilungsnachrichten bei der Zustellung von Multimedianachrichten an als Multimedianachrichtensenken ausgebildete Telekommunikationsgeräte anzugeben, bei dem der Aufwand für die Übertragung der Mitteilungsnachrichten und der damit verbundene Verwaltungsaufwand in einer die Mitteilungsnachricht sendenden Instanz bei der Zustellung der Multimedianachrichten an die als Multimedianachrichtensenken ausgebildeten Telekommunikationsgeräte unabhängig von deren Multimediafähigkeit reduziert wird.

Diese Aufgabe wird ausgehend von dem im Oberbegriff des Anspruchs 1 definierten Verfahren durch die im Kennzeichen des Anspruchs 1 angegebenen Merkmale gelöst.

Die der Erfindung zugrundeliegende Idee besteht darin, dass ein bei der Zustellung von Multimedianachrichten an als Multimedianachrichtensenken ausgebildete Telekommunikationsgeräte für das Versenden von Mitteilungsnachrichten zuständiges Dienstzentrum in einer Mitteilungsnachricht eine erste Mitteilungsinformation, die gemäß Anspruch 5 vorzugsweise binär codiert ist, und eine zweite Mitteilungsinformation, die gemäß Anspruch 6 vorzugsweise als Textinformation ausgebildet ist, einheitlich an bezüglich der Multimediafähigkeit unterschiedlich ausgeprägte Telekommunikationsgeräte überträgt.

Durch die Kombination der als erste Mitteilungsinformation ausgebildeten binär codierten MMS-Notifikation und der als zweite Mitteilungsinformation ausgebildeten MMS-Notifikation in Form eines normalen Textes ist es insbesondere möglich, dass MMS-fähige und Nicht-MMS-fähige Telekommunikationsgeräte einheitlich über das Vorliegen einer Multimedianachricht im Multimedianachrichten-Dienstzentrum informiert werden, also stets die gleiche MMS-Notifikation erhalten. Die bislang notwendige Unterscheidung zwischen MMS-fähigen und Nicht-MMS-fähigen Telekommunikationsgeräten und die damit verbundene Auswahl der jeweils geeigneten MMS-Notifizierung in dem für die MMS-Notifizierung zuständigen Dienstzentrum entfällt somit. Als Träger für die Notifizierung bietet sich gemäß Anspruch 2 vorzugsweise der Kurznachrichten-Dienst, der sogenannte "Short Message Service (SMS)" an.

Die vorstehend angegebene Szenario, Kombination der binär codierten MMS-Notifikation mit der MMS-Notifikation in Textform und Verwendung des Kurznachrichten-Dienstes, ist auch kompatibel mit dem "Short Message Service (SMS)" im Mobilnetz, der den Versand von Binärdaten und Textinformation durch den sogenannten "User-Data-Header"-Mechanismus zulässt. Dieser Mechanismus wird beispielsweise auch für die Einbettung von "Enhanced Message Service (EMS)"-Elementen - wie z.B. Bilder und Melodien, in eine Kurznachricht genutzt.

Alternativ lässt sich die Erfindung auch auf andere Träger für die Notifizierung - wie z.B. gemäß Anspruch 3 einer noch zu definierenden Variante des "Wireless Application Protocol"-Dienstes mit einer modifizierten "WAP-Push"-Nachricht, gegebenenfalls spezialisiert auf die Verwendung im Mobilnetz oder gemäß Anspruch 4 einer noch zu definierenden Variante des "Message Waiting Indication (MWI)"-Dienstes mit einer modifizierten MWI-Nachricht, gegebenenfalls spezialisiert auf die Verwendung im Festnetz - anwenden.

Die Vorteile der Erfindung liegen darin, dass das für das Versenden der Mitteilungsnachrichten zuständige Dienstzentrum, beispielsweise das für die Zustellung der Multimedianachrichten verantwortliche Multimedianachrichten-Dienstzentrum oder ein für den Versand genutztes Gateway - im Fall des SMS-Trägers für die Notifizierung das Kurznachrichten-Dienstzentrum, nunmehr keine Kenntnis darüber besitzen muss, ob es sich bei dem zu notifizierenden Telekommunikationsgerät um ein MMS-fähiges oder um ein Nicht-MMS-fähiges Gerät handelt. Hierdurch ergibt sich eine Vereinfachung des Notifizierungsvorganges.

Ein weiterer Vorteil ist, dass bei temporärer Nicht-Verfügbarkeit der MMS-Funktionalität des Telekommunikationsgerätes die Textinformation der eingegangenen MMS-Notifikation vom Benutzer gelesen und genutzt werden kann. Steht die MMS-Funktionalität des Telekommunikationsgerätes zu einem späteren Zeitpunkt wieder zur Verfügung, so kann die binär codierte Information der Notifikation ausgewertet werden, um dann beispielsweise die Multimedianachricht herunterzuladen. Dieses Szenario ergibt sich beispielsweise bei SMS-fähigen Schnurlos-Basisstationen von Schnurlostelefonen, an der als Telekommunikationsgerät neben SMS-fähigen Schnurlos-Mobilteilen auch MMS-fähige Schnurlos-Mobilteile betrieben werden, wobei die temporäre Nicht-Verfügbarkeit der MMS-Funktionalität beispielsweise durch das Ausser-Reichweite-Bringen des MMS-fähigen Schnurlos-Mobilteils erreicht wird und das Lesen und Nutzen der Textinformation der eingegangenen MMS-Notifikation durch den Benutzer am SMS-fähigen Schnurlos-Mobilteil erfolgt.

Sollte jedoch auch das SMS-fähige Schnurlos-Mobilteil temporär nicht verfügbar sein, und nur noch ein Schnurlos-Mobilteil zur Verfügung stehen, das weder eine SMS-Funktionalität noch eine MMS-Funktionalität besitzt, so ist aufgrund der Textinformation der MMS-Notifikation noch eine Nutzbarkeit gegeben, da in diesem Fall üblicherweise die Zustellung der Mitteilungsnachricht mittels einer sogenannten "Text-To-Speech"-Funktionalität des zuständigen Dienstzentrums gegeben ist.

Weitere vorteilhafte Weiterbildungen der Erfindung sind in den übrigen Unteransprüchen und der nachfolgenden Beschreibung des Ausführungsbeispiels der Erfindung angegeben.

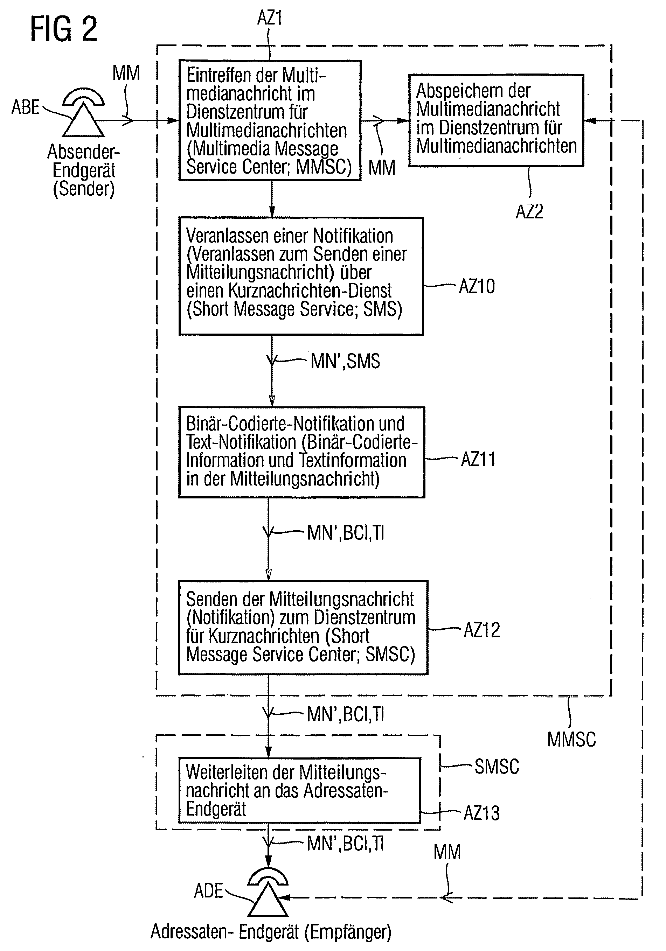

Ein Ausführungsbeispiel der Erfindung wird anhand der FIGUR 2 erläutert. Es zeigt:
FIGUR 2 ausgehend von FIGUR 1 ein modifiziertes kombiniertes Block-/Ablaufdiagramm zur Darstellung der Übertragung einer Mitteilungsnachricht (Notifikation) bei der Zustellung einer Multimedianachricht, die z.B. wieder von einem Absender-Endgerät (Sender) stammt, an ein Adressaten-Endgerät (Empfänger).

FIGUR 2 zeigt wie das Absender-Endgerät ABE als Sender wieder eine für das Adressaten-Endgerät ADE als Empfänger bestimmte Multimedianachricht ("Multimedia Message") MM an das Multimedianachrichten-Dienstzentrum MMSC, dem "Multimedia Message Service Center", sendet. Diese gesendete Multimedianachricht MM trifft wieder in dem ersten Ablaufzustand AZ1 beim Multimedianachrichten-Dienstzentrum MMSC ein und wird in dem zweiten Ablaufzustand AZ2 in einen Speicher des Multimedianachrichten-Dienstzentrums MMSC abgespeichert. In einem zehnten Ablaufzustand AZ10 veranlasst das Multimedianachrichten-Dienstzentrum MMSC, das eine gegenüber der Mitteilungsnachricht MN in FIGUR 1 modifizierte Mitteilungsnachricht MN' an das Adressaten-Endgerät ADE gesendet wird. Dieses Versenden der Mitteilungsnachricht MN' geschieht im Festnetz vorzugsweise wieder über den Kurznachrichten-Dienst SMS, den "Short Message Service".

In einem daran anschließenden elften Ablaufzustand AZ11 des Multimedianachrichten-Dienstzentrums MMSC wird die Mitteilungsnachricht MN' als Text-Notifikation, bei der die Mitteilungsnachricht MN als erste Mitteilungsinformation vorzugsweise wieder die Textinformation TI enthält, und als Binär-Codierte-Notifikation, bei der die Mitteilungsnachricht MN wieder die Binär-Codierte-Information BCI enthält, ausgeführt.

Danach werden in einem zwölften Ablaufzustand AZ12 des Multimedianachrichten-Dienstzentrums MMSC sowohl die Binär-Codierte-Notifikation MN', BCI als auch die Text-Notifikation MN', TI gemeinsam von dem Multimedianachrichten-Dienstzentrum MMSC entsprechend der SMS-Trägerschaft für die Mitteilungsnachricht zu einem Kurznachrichten-Dienstzentrum SMSC gesendet.

Die von dem Multimedianachrichten-Dienstzentrum MMSC als Binär-Codierte-Notifikation und Text-Notifikation gesendete Mitteilungsnachricht MN' wird von dem Kurznachrichten-Dienstzentrurn SMSC in einem dreizehnten Ablaufzustand AZ13 an das Adressaten-Endgerät ADE weitergeleitet.

Aufgrund dieser weitergeleiteten Mitteilungsnachricht MN ist das Adressaten-Endgerät ADE, sofern sich um ein MMS-fähiges Endgerät handelt, das die Binär-Codierte-Notifikation MN', BCI auswerten kann, schließlich in der Lage, die in dem zweiten Ablaufzustand AZ2 abgespeicherte Multimedianachricht MM von dem Multimedianachrichten-Dienstzentrum MMSC abzuholen bzw. herunterzuladen (gestrichelte Verbindung in FIGUR 1 zwischen dem Adressaten-Endgerät ADE und dem zweiten Ablaufzustand AZ2 im Multimedianachrichten-Dienstzentrum MMSC).

Bei diesem Ablauf stellt sich das aus FIGUR 1 bekannte Problem, dass das die Mitteilungsnachricht übertragende Multimedianachrichten-Dienstzentrum MMSC bzw. das für die Übertragung genutzte "Gateway", im vorliegenden Fall das Kurznachrichten-Dienstzentrum SMSC, Kenntnis darüber besitzen muss, ob es sich bei dem Adressaten-Endgerät ADE um ein MMS-fähiges oder um ein Nicht-MMS-fähiges Endgerät handelt, um eine entsprechend geeignete MMS-Notifikation, die Binär-Codierte-Notifikation MN, BCI bzw. die Text-Notifikation MN, TI, versenden zu können, nicht mehr.

So wird bei einem SMS-basierten Träger für die MMS-Notifizierung sowohl von MMS-fähigen Endgeräten als auch von Nicht-MMS-fähigen Endgeräten eine Kurznachricht verwendet, die eine Notifikation in binär codierter Form und als normalen Text enthält. Die MMS-Funktionalität in dem MMS-fähigen Endgerät ist in der Lage, die Binär-Codierte-Notifikation auszuwerten und beispielsweise die in der Notifikation bezeichnete Multimedianachricht vom Multimedianachrichten-Dienstzentrum abzuholen bzw. herunterzuladen, während in dem Nicht-MMS-fähigen Endgerät die beispielsweise auf einem Display des Endgerätes angezeigte Textinformation in der Notifikation z.B. auf eine Internet-Adresse verweist, unter der die entsprechende Multimedianachricht abrufbar ist.

Alternativ zu dem Kurznachrichten-Dienst SMS im Festnetz ist es aber auch möglich einen gegenüber dem bekannten "Message Waiting Indication"-Dienst einen modifizierten noch zu definierenden "Message Waiting Indication"-Dienst mit einer modifizierten "MWI"-Nachricht als Mitteilungsnachrichtenträger zu verwenden. Dieser modifizierte "Message Waiting Indication"-Dienst muss dabei so definiert werden, dass mit der modifizierten "MWI"-Nachricht beispielsweise Textinformationen und Binär-Codierte-Informationen übertragen werden können. Will man analog zum Festnetz das gleiche Szenario im Mobilnetz realisieren, so ist hier entweder ausgehend von dem bekannten "Wireless Application Protocol (WAP)"-Dienst ein modifizierter "Wireless Application Protocol"-Dienst mit einer modifizierten "WAP-Push"-Nachricht erforderlich, mit der beispielsweise auch Textinformationen und Binär-Codierte-Informationen übertragen werden können oder es muss Kurznachrichten-Dienst SMS mit der in der FIGUR 2 dargestellten Ausprägung bzw. der modifizierte noch zu definierende "Message Waiting Indication"-Dienst mit der modifizierten "MWI"-Nachricht eingeführt werden.

## Patentansprüche

1. Verfahren zum Übertragen von Mitteilungsnachrichten bei der Zustellung von Multimedianachrichten an als Multimedianachrichtensenken ausgebildete Telekommunikationsgeräte, bei dem
ein bei der Zustellung von Multimedianachrichten (MM) für das Versenden der Mitteilungsnachrichten (MN, MN') zuständiges Dienstzentrum (MMSC) eine Binär-Codierte-Notifikation (BCI) an ein für Multimedianachrichten (MM) geeignetes Telekommunikationsgerät (ADE) und eine Text-Notifikation (TI) an ein für Multimedianachrichten (MM) ungeeignetes Telekommunikationsgerät (ADE) überträgt,
**dadurch gekennzeichnet, dass**
die Binär-Codierte-Notifikation (BCI) und die Text-Notifikation (TI) jeweils gemeinsam in einer Mitteilungsnachricht (MN') an die Telekommunikationsgeräte (ADE) übertragen werden.

2. Verfahren nach Anspruch 1, **dadurch**
**gekennzeichnet, dass**
die Mitteilungsnachricht (MN') mittels eines Kurznachrichten-Dienstes als Kurznachricht übertragen wird.

3. Verfahren nach Anspruch 1, **dadurch**
**gekennzeichnet, dass**
die Mitteilungsnachricht (MN') mittels eines modifizierten "Wireless Application Protocol"-Dienstes als modifizierte "WAP-Push"-Nachricht übertragen wird.

4. Verfahren nach Anspruch 1, **dadurch**
**gekennzeichnet , dass**
die Mitteilungsnachricht (MN') mittels eines modifizierten "Message Waiting Indication"-Dienstes als modifizierte "MWI"-Nachricht übertragen wird.

5. Verfahren nach Anspruch 1, **dadurch**
**gekennzeichnet, dass**
ein für Multimedianachrichten geeignetes Telekommunikationsgerät als Absender-Endgerät (ABE) und ein für Kurznachrichten geeignetes und für Multimedianachrichten ungeeignetes Telekommunikationsgerät als Adressaten-Endgerät (ADE) oder ein für Multimedianachrichten geeignetes Telekommunikationsgerät als Absender-Endgerät (ABE) und als Adressaten-Endgerät (ADE) benutzt wird.

## Claims

1. Method for transmitting notification messages in the submission of multimedia messages to telecommunications devices embodied as multimedia message sinks, in which a service centre (MMSC) responsible in the submission of multimedia messages (MM) for sending the notification messages (MN, MN') transmits a binary coded notification (BCI) to a telecommunications device (ADE) suitable for multimedia messages (MM) and a text notification (TI) to a telecommunications device (ADE) not suitable for multimedia messages (MM),
**characterised in that**
the binary coded notification (BCI) and the text notification (TI) are each transmitted jointly in one notification message (MN') to the telecommunications devices (ADE).

2. Method according to claim 1, **characterised in that** the notification message (MN') is transmitted as a short message using a Short Message Service.

3. Method according to claim 1, **characterised in that** the notification message (MN') is transmitted as a modified WAP push message using a modified Wireless Application Protocol service.

4. Method according to claim 1, **characterised in that** the notification message (MN') is transmitted as a modified MWI message using a modified Message Waiting Indication service.

5. Method according to claim 1, **characterised in that** a telecommunications device suitable for multimedia messages is used as the transmitting terminal (ABE) and a telecommunications device suitable for short messages and unsuitable for multimedia messages is used as addressee terminal (ADE) or a telecommunications device suitable for multimedia messages is used as transmitting terminal (ABE) and as the addressee terminal (ADE).

## Revendications

1. Procédé de transmission de messages de communication lors de la remise de messages multimédia à des appareils de télécommunication configurés comme collecteurs de messages multimédia, dans lequel un centre de services (MMSC) compétent lors de la remise de messages multimédia (MM) pour l'envoi des messages de communication (MN, MN') transmet une notification à codage binaire (BCI) à un appareil de télécommunication (ADE) convenant pour des messages multimédia (MM) et une notification de texte (TI) à un appareil de télécommunication (ADE) ne convenant pas pour des messages multimédia (MM), **caractérisé en ce que** l'on transmet la notification à codage binaire (BCI) et la notification de texte (TI) chaque fois en commun dans un message de communication (MN') aux appareils de télécommunication (ADE).

2. Procédé selon la revendication 1, **caractérisé en ce que** l'on transmet le message de communication (MN') sous forme de message court au moyen d'un service de messages courts.

3. Procédé selon la revendication 1, **caractérisé en ce que** l'on transmet le message de communication (MN') sous forme de message "WAP-Push" modifié au moyen d'un service "Wireless Application Protocol" modifié.

4. Procédé selon la revendication 1, **caractérisé en ce que** l'on transmet le message de communication (MN') sous forme de message "MWI" modifié au moyen d'un service "Message Waiting Indication" modifié.

5. Procédé selon la revendication 1, **caractérisé en ce que** l'on utilise un appareil de télécommunication convenant pour des messages multimédia comme terminal émetteur (ABE) et un appareil de télécommunication convenant pour des messages courts et ne convenant pas pour des messages multimédia comme terminal destinataire (ADE) ou un appareil de télécommunication convenant pour des messages multimédia comme terminal émetteur (ABE) et comme terminal destinataire (ADE).
